# EUROPÄISCHE PATENTSCHRIFT

(11) **EP 2 430 960 B1**
(45) Veröffentlichungstag und Bekanntmachung des Hinweises auf die Patenterteilung: **04.04.2012**
(21) Anmeldenummer: 10401137.4
(22) Anmeldetag: 12.08.2010
(51) Int. Cl.: A47L 9/12, B01D 46/00

(54) **Filterkassette für Staubsauger**
Filter cartridge for a vacuum cleaner
Cartouche de filtre pour aspirateurs

(43) Veröffentlichungstag der Anmeldung: 21.03.2012
(73) Patentinhaber: Miele & Cie. KG, 33332 Gütersloh (DE)
(72) Erfinder: Dyck, Sandra, 33719 Bielefeld (DE); Gerth, Volker, 33739 Bielefeld (DE); Kreimeyer, Stefan, 33729 Bielefeld (DE); Poetting, Michael, 33611 Bielefeld (DE)

(56) Entgegenhaltungen:
- DE-A1- 3 404 395
- DE-A1- 4 240 172
- DE-B3-102006 009 257

## Beschreibung

Die Erfindung betrifft eine Filterkassette für Staubsauger, mit einem Unterteil und einem klappbaren Oberteil, welche im zusammengeklappten Zustand einen Raum zur Aufnahme einer Filtermatte bilden, wobei an dem Oberteil ein Rasthaken zum Eingriff an einem Randelement des Unterteils angeordnet ist.

Filterkassetten dieser Art sind allgemein bekannt. Sie werden von der Anmelderin zusammen mit Staubsaugern, beispielsweise einem S4212, vertrieben und dienen zur Halterung eines Nachfilters, welcher im Abluftstrom des Staubsaugers angeordnet ist. Ähnliche Filterkassetten können auch zur Halterung eines Motorschutzfilters eingesetzt werden. Bei den bekannten Filterkassetten ist am Unterteil ein Rasthaken angeordnet, welcher einen Rand am Oberteil hintergreift und so das Oberteil in der Verschlussposition hält. Der Rasthaken ist leicht angeschrägt, so dass er sich durch Zug am Oberteil leicht anhebt und eine Öffnung des Oberteils zulässt. Zur Unterstützung ist an dem Oberteil eine Handhabe angeordnet, an der die Zugbewegung ausgeführt werden kann. Bei der vorgeschriebenen Lösung muss ein Kompromiss zwischen Schließkraft und einfacher Bedienung erzielt werden. Einerseits darf das Oberteil durch den ausgeblasenen Luftstrom nicht selbsttätig geöffnet werden, andererseits soll dem Bediener eine Öffnung des Oberteils mit geringem Kraftaufwand und ohne Verletzungsgefahr ermöglicht werden. Der Zeitpunkt, an dem sich der haken löst, ist für den Bediener nicht vorhersehbar, somit kann es durch plötzliches Öffnen des Oberteils auch zu Verletzungen an vorstehenden Rippen kommen.

Der Erfindung stellt sich somit das Problem, bei einer Filterkassette der eingangs beschriebenen Art die Handhabung zu erleichtern.

Erfindungsgemäß wird dieses Problem durch eine Filterkassette mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile ergeben sich dadurch, dass an dem einen Teil eine erste Handhabe und eine zweite Handhabe im Greifabstand zueinander angeordnet sind, und dass die erste Handhabe derart mit dem Rasthaken in Wirkverbindung steht, dass beim Zusammendrücken beider Handhaben der Rasthaken eine Schwenkbewegung in Öffnungsrichtung ausführt. Hierdurch wird eine Hebelwirkung erzielt, durch die auch ein Rasthaken mit hoher Schließkraft ohne große Kraftanwendung geöffnet werden kann. Dabei ist es zweckmäßig, wenn der Rasthaken und die erste Handhabe auf gegenüberliegenden Seiten eines biegsamen Randstegs an dem einen Teil angeordnet sind.

Eine versetzte Anordnung des Rasthakens und der ersten Handhabe an dem Randsteg verringert die Möglichkeit, dass der Randsteg durch häufige Betätigung abbricht.

In einfachster Weise sind der Rasthaken und die Handhaben einstückig mit dem einen Teil ausgebildet, beispielsweise als Spritzgussteil aus Kunststoff.

Ein Ausführungsbeispiel der Erfindung ist in den Zeichnungen rein schematisch dargestellt und wird nachfolgend näher beschrieben. Es zeigt
- Figur 1: eine Filterkassette in perspektivischer Darstellung mit geschlossenem Oberteil,
- Figur 2: eine Filterkassette in perspektivischer Darstellung mit geöffnetem Oberteil,
- Figur 3: eine Filterkassette im Schnitt mit geschlossenem Oberteil,
- Figur 4: eine Filterkassette im Schnitt mit geöffnetem Oberteil.

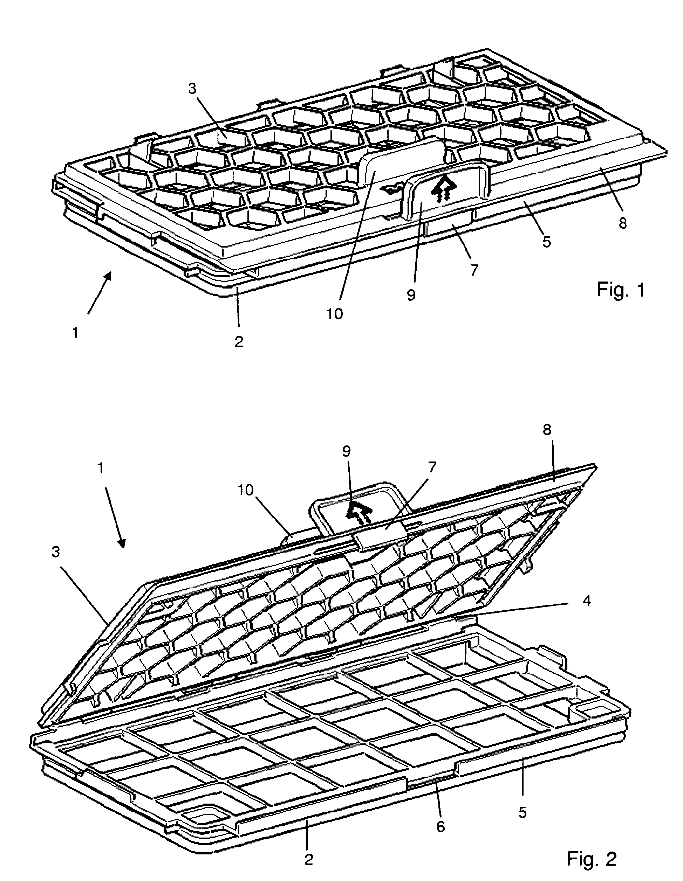

In den Figuren 1 bis 4 ist eine erfindungsgemäß aufgebaute Filterkassette 1 als Einzelheit dargestellt. Die Anordnung einer solchen Kassette 1 im Abluftstrom eines Staubsaugers und die dafür notwendige Filterkassettenaufnahme am Staubsauger sind hinreichend bekannt, beispielsweise durch den vorgenannten S4212, aber auch durch die DE 42 40 172 A1, und sind deswegen hier nicht näher gezeigt oder beschrieben.

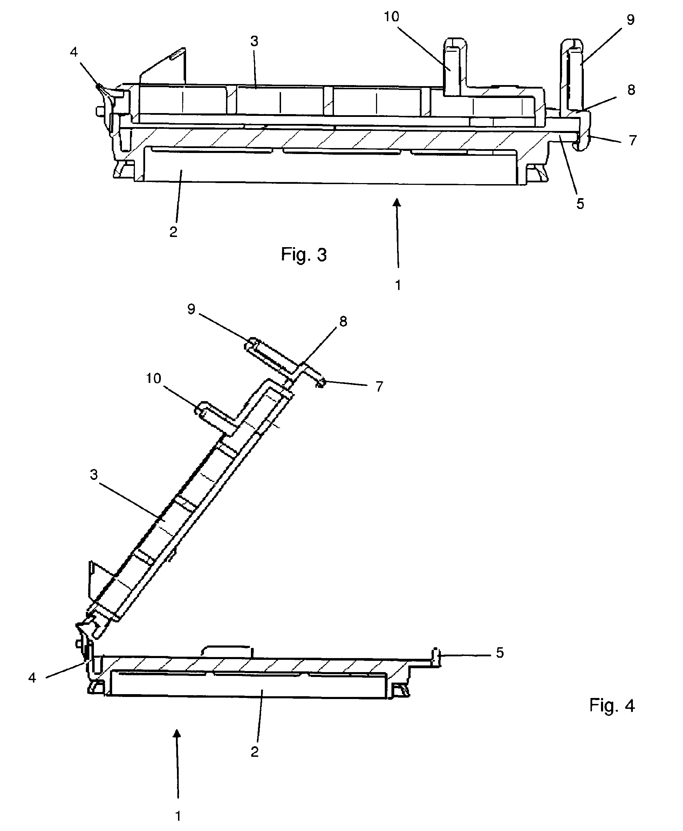

Die Filterkassette 1 besteht aus einem Unterteil 2 und einem Oberteil 3, welche beide eine gitterartige Struktur aufweisen. Das Oberteil ist am Unterteil in geeigneter Weise scharniert, beispielsweise durch ein Filmscharnier. Es ist aber auch eine Steckverbindung denkbar. Durch die Scharnierung 4 kann das Oberteil 3 in die in den Figuren 2 und 4 dargestellte geöffnete Position geschwenkt werden und kann dann eine nicht gezeigte Filtermatte aufnehmen. Das Unterteil 2 besitzt ein abgewinkeltes Randelement 5, an dem etwa in der Mitte ein Einschnitt 6 vorhanden ist. In diesen Einschnitt 6 taucht ein Rasthaken 7, welcher an einem biegsamen Randsteg 8 des Oberteils 3 angeformt ist. Auf der gegenüberliegenden Seite des Randstegs 8 ist mit einem gewissen Versatz eine erste Handhabe 9 angeformt, siehe insbesondere die Schnittdarstellungen in den Figuren 3 und 4. In Figur 3 ist außerdem gut zu erkennen, dass der Rasthaken 7 zum Schließen der Kassette 1 den waagerechten Steg des Randelements 5 umgreift. Eine zweite Handhabe 10 ist ebenfalls an dem Oberteil 3 angeformt. Sie befindet sich im Greifabstand zur ersten Handhabe 9, so dass der Bediener beide Handhaben 9 und 10 mit Daumen und Zeigefinger einer Hand fassen und gegeneinander drücken kann. Dabei führt der Randsteg 8 eine Biegung durch, in der Figur 3 nach oben gegen den Uhrzeigersinn, und nimmt den Rasthaken 7 mit und von dem Randelement 5 weg. Die Verriegelung wird somit gelöst. Durch eine gewisse Federwirkung zwischen Oberteil 3 und Unterteil 2 kann eine selbsttätige Öffnung erzielt werden, ansonsten lässt sich dass Oberteil 3 aber auch leicht an den gegriffenen Handhaben 9 und 10 nach oben ziehen.

Die Anordnung der Handhaben 9 und 10 und des Rasthakens 7 am Oberteil 3 ist vorteilhaft, weil dann die Kassette 1 auch im eingelegten Zustand geöffnet werden kann. Diese Anordnung ist aber nicht zwingend notwendig, die Vorrichtungen an Oberteil 3 und Unterteil 2 können auch ausgetauscht werden. Ebenso ist eine Anordnung von einem oder sogar zwei Rasthaken 7 mit entsprechenden Handhaben 9 und 10 an den seitlichen Rändern der Filterkassette 1 möglich.

## Patentansprüche

1. Filterkassette (1) für Staubsauger, mit einem Unterteil (2) und einem klappbaren Oberteil (3), welche im zusammengeklappten Zustand einen Raum zur Aufnahme einer Filtermatte bilden, wobei an einem Teil (3) ein Rasthaken (7) zum Eingriff an einem Randelement (5, 6) des anderen Teils (2) angeordnet ist,
**dadurch gekennzeichnet,**
**dass** an dem einen Teil eine erste Handhabe (9) und eine zweite Handhabe (10) im Greifabstand zueinander angeordnet sind, und dass die erste Handhabe (9) derart mit dem Rasthaken (7) in Wirkverbindung steht, dass beim Zusammendrücken beider Handhaben (9, 10) der Rasthaken (7) eine Schwenkbewegung in Öffnungsrichtung ausführt.

2. Filterkassette (1) nach Anspruch 1,
**dadurch gekennzeichnet,**
**dass** der Rasthaken (7) und die erste Handhabe (9) auf gegenüberliegenden Seiten eines biegsamen Randstegs (8) an dem einen Teil (3) angeordnet sind.

3. Filterkassette (1) nach Anspruch 2,
**dadurch gekennzeichnet,**
**dass** der Rasthaken (7) und die erste Handhabe (9) versetzt an dem Randsteg (8) angeordnet sind.

4. Filterkassette (1) nach einem der Ansprüche 1 bis 3,
**dadurch gekennzeichnet,**
**dass** der Rasthaken (7) und die Handhaben (9, 10) einstückig mit dem einen Teil (3) ausgebildet sind.

## Claims

1. Filter cartridge (1) for a vacuum cleaner, having a lower part (2) and a foldable upper part (3), which form a chamber for receiving a filter mat when folded together, a catch hook (7) being arranged on one part (3) to engage on an edge element (5, 6) of the other part (2),
**characterised in that**
a first handle (9) and a second handle (10) are arranged at a gripping distance from each other on the one part, and **in that** the first handle (9) is operatively connected to the catch hook (7) in such a way that when the two handles (9, 10) are pressed together, the catch hook (7) performs a pivoting movement in the opening direction.

2. Filter cartridge (1) according to claim 1,
**characterised in that**
the catch hook (7) and the first handle (9) are arranged on opposite sides of a flexible edge web (8) on the one part (3).

3. Filter cartridge (1) according to claim 2,
**characterised in that**
the catch hook (7) and the first handle (9) are arranged offset on the edge web (8).

4. Filter cartridge (1) according to any one of claims 1 to 3,
**characterised in that**
the catch hook (7) and the handles (9, 10) are formed integrally with the one part (3).

## Revendications

1. Cassette filtrante (1) pour aspirateurs, avec une partie inférieure (2) et une partie supérieure (3) rabattable qui forment, à l'état rassemblé, un espace pour loger un tapis filtrant, un crochet d'encliquetage (7) étant disposé sur une partie (3) pour entrer en prise avec un élément marginal (5, 6) de l'autre partie (2),
**caractérisée en ce que**,
sur une partie, il est disposé une première manette (9) et une deuxième manette (10) à distance de prise l'une par rapport à l'autre, et **en ce que** la première manette (9) est en relation opératoire avec le crochet d'encliquetage (7) de sorte que, lors d'une pression exercée sur les deux manettes (9, 10), le crochet d'encliquetage (7) exécute un mouvement pivotant dans la direction d'ouverture.

2. Cassette filtrante (1) selon la revendication 1,
**caractérisée en ce que**
le crochet d'encliquetage (7) et la première manette (9) sont disposés sur des côtés opposés d'une nervure marginale (8) flexible sur un côté (3).

3. Cassette filtrante (1) selon la revendication 2,
**caractérisée en ce que**
le crochet d'encliquetage (7) et la première manette (9) sont disposés de façon décalée sur la nervure marginale (8).

4. Cassette filtrante (1) selon l'une des revendications 1 à 3,
**caractérisée en ce que**
le crochet d'encliquetage (7) et les manettes (9, 10) sont constitués d'un seul tenant avec la partie (3).
